# EUROPEAN PATENT APPLICATION

(11) **EP 4 644 151 A1**
(43) Date of publication of application: **05.11.2025**
(21) Application number: 23912006.6
(22) Date of filing: 22.12.2023
(51) Int. Cl.: B60K 1/04, B60L 50/60, B60L 53/16

(54) **ELECTRIC WORK VEHICLE**

(30) Priority: 27.12.2022 JP 2022210895; 04.01.2023 JP 2023000197
(71) Applicant: Kubota Corporation, Osaka 556-8601 (JP)
(72) Inventor: YAMAGUCHI, Tatsuya, Sakai-shi, Osaka 590-0908 (JP); OGURI, Takefumi, Sakai-shi, Osaka 590-0908 (JP); MITSUI, Haruki, Sakai-shi, Osaka 590-0908 (JP); YASUI, Daiki, Sakai-shi, Osaka 590-0908 (JP); ARAKI, Chihiro, Sakai-shi, Osaka 590-0908 (JP); IMAIZUMI, Makoto, Sakai-shi, Osaka 590-0908 (JP); OBATA, Norio, Sakai-shi, Osaka 590-0908 (JP)
(74) Representative: Schlegel, Sebastian
(86) International application number: PCT/JP2023/046260
(87) International publication number: WO 2024/143226

(57) **Abstract**

An electric work vehicle includes: at least one electric wire (60) electrically connected to at least one power port; at least one connection section (70) disposed at an end of the at least one electric wire (60) and connected to the at least one power port; at least one lock mechanism (80) configured to lock the at least one connection section (70) with the at least one connection section (70) connected to the at least one power port, the at least one lock mechanism (80) including at least one manually operable section (84) and being switchable in response to an operation of the at least one manually operable section (84) between a locking state, in which the at least one lock mechanism (80) locks the at least one connection section (70) with the at least one connection section (70) connected to the at least one power port, and an unlocking state, in which the at least one lock mechanism (80) allows the at least one connection section (70) to be removed from the at least one power port; and a restrictor (26) disposed within the operation range (K) of the at least one manually operable section (84) and fixed to the body of the electric work vehicle with use of a fixing section (b1) attachable and detachable with use of a tool.

## Description

### Technical Field

The present invention relates to an electric work vehicle including a battery and a motor drivable by electric power supplied from the battery.

### Background Art

Patent Literature 1, for example, discloses an electric work vehicle as described above. The electric work vehicle travels with use of travel devices ("front wheels" and "rear wheels" in Patent Literature 1) drivable by a motor ("electric motor" in Patent Literature 1). The battery supplies the electric power to the motor through an electric wire ("electric wire" in Patent Literature 1).

### Citation List

Patent Literature 1: Japanese Unexamined Patent Application Publication, Tokukai, No. 2013-248918

### Summary of Invention

### Technical Problem

Patent Literature 1 is silent about the structure of the portion at which the electric wire is connected to the battery. The electric work vehicle disclosed in Patent Literature 1 may include a power port at a side portion of the battery and a connection section connected to the power port and disposed at an end of the electric wire.

Such a configuration will allow electric power to be supplied from the battery through the electric wire to the motor with use of a relatively simple structure. This configuration will, however, fail to drive the motor if a worker accidentally removes the connection section from the power port. This may lead to, for instance, the electric work vehicle being incapable of traveling.

The present invention has an object of providing an electric work vehicle configured to prevent a worker from accidentally removing a connection section at an end of an electric wire from a power port.

### Solution to Problem

An electric work vehicle according to the present invention includes: a battery; a motor drivable by electric power supplied from the battery; a travel device drivable by the motor; at least one power port at a side portion of the battery, the at least one power port being an input port configured to receive electric power into the battery or an output port configured to output electric power from the battery; at least one electric wire electrically connected to the at least one power port; at least one connection section disposed at an end of the at least one electric wire and connected to the at least one power port; at least one lock mechanism configured to lock the at least one connection section with the at least one connection section connected to the at least one power port, the at least one lock mechanism including at least one manually operable section and being switchable in response to an operation of the at least one manually operable section between a locking state, in which the at least one lock mechanism locks the at least one connection section with the at least one connection section connected to the at least one power port, and an unlocking state, in which the at least one lock mechanism allows the at least one connection section to be removed from the at least one power port; and a restrictor disposed within an operation range of the at least one manually operable section, the restrictor being fixed to a body of the electric work vehicle with use of a fixing section attachable and detachable with use of a tool.

With the above configuration, the lock mechanism is configured to lock the connection section as connected to the power port. This requires a worker to operate the manually operable section to remove the connection section from the power port. This in turn prevents a worker from accidentally removing the connection section from the power port, as compared to a configuration including no lock mechanism or manually operable section.

Further, with the above configuration, the restrictor is disposed within the operation range of the manually operable section and is fixed to the body with use of a fixing section attachable and detachable with use of a tool. This requires a worker to remove the fixing section with use of a tool and remove the restrictor to operate the manually operable section. This in turn prevents a worker from accidentally operating the manually operable section.

The electric work vehicle is therefore configured to prevent a worker from accidentally removing the connection section at an end of the electric wire from the power port.

The electric work vehicle may preferably be further configured such that the restrictor is fixed to the battery with use of the fixing section.

With the above configuration, the restrictor is held by the battery stably.

The electric work vehicle may preferably be further configured such that the restrictor includes a connection section cover covering the at least one connection section.

With the above configuration, the restrictor protects the connection section, in other words, has the function of protecting the connection section. This reduces the number of parts used while protecting the connection section.

The electric work vehicle may preferably be further configured such that the restrictor is open downward.

The above configuration prevents heat from being trapped in the space covered by the restrictor, as compared to a restrictor closed downward. This eliminates the need to include a dedicated member for letting heat from the space covered by the restrictor, thereby reducing the production cost.

The electric work vehicle may preferably be further configured such that the restrictor has an inclined upper surface.

With the above configuration, the restrictor lets foreign matter such as sand on its inclined upper surface fall therefrom, thereby preventing foreign matter such as sand from accumulating on the upper surface.

The electric work vehicle may preferably be further include a plurality of wire structures including the power port, the electric wire, the connection section, the lock mechanism and the manually operable section, the manually operable sections are arranged laterally, and the restrictor is in a form of a single element extending over the respective operation ranges of the plurality of manually operable sections.

With the above configuration, the restrictor is in the form of a single element for restricting the operation of the manually operable sections. This reduces the number of parts used, as compared to a configuration with two or more restrictors corresponding to the respective manually operable sections.

Another electric work vehicle according to the present invention includes: a battery; a motor drivable by electric power supplied from the battery; a travel device drivable by the motor; at least one power port at a side portion of the battery, the at least one power port being an input port configured to receive electric power into the battery or an output port configured to output electric power from the battery; at least one electric wire electrically connected to the at least one power port; at least one connection section disposed at an end of the at least one electric wire and connected to the at least one power port; and a connection section cover covering the at least one connection section.

With the above configuration, the connection section cover covers the connection section to prevent a worker from accidentally removing the connection section from the power port, as compared to a configuration with no connection section cover.

The electric work vehicle is therefore configured to prevent a worker from accidentally removing the connection section at an end of the electric wire from the power port.

The electric work vehicle may preferably be further configured such that the connection section cover is held by the battery.

The above configuration allows the connection section cover to be held stably.

The electric work vehicle may preferably further include: a cover member covering the battery and swingable about a swing axis to be opened and closed, the swing axis extending laterally relative to a body of the electric work vehicle; and a support arm covered by the cover member, including a base end portion and a free end portion, swingable upward and downward with the base end portion as a center, and configured to be erected such that the free end portion is in contact with the cover member from below to support the cover member with the cover member open, wherein the support arm is held by the connection section cover.

With the above configuration, the connection section cover has the function of holding the support arm. This reduces the number of parts used while holding the support arm.

The electric work vehicle may preferably be further configured such that the connection section cover is divided into a plurality of cover sections.

The above configuration allows a worker to, in maintaining a portion covered by one of the cover sections, simply remove that cover section to reach the portion, and does not require the worker to remove the entire connection section cover to reach the portion. This facilitates the maintenance.

The electric work vehicle may preferably further include: a power feed section to which a charger is connectable and which is electrically connected to the battery through the at least one electric wire, wherein the power feed section is held by the connection section cover.

With the above configuration, the connection section cover has the function of holding the power feed section. This reduces the number of parts used while holding the power feed section.

The electric work vehicle may preferably further include: a radiator; and a radiator frame holding the radiator, wherein the connection section cover is held by the radiator frame.

With the above configuration, the radiator frame has the function of holding the connection section cover. This reduces the number of parts used while holding the connection section cover.

The electric work vehicle may preferably be further configured such that the connection section cover includes an upper portion above and on the battery.

The above configuration allows a worker to, in attaching the connection section cover to the body, place an upper portion of the connection section cover above and on the battery, thereby facilitating the attachment.

The electric work vehicle may preferably be further configured such that the connection section cover includes a first wall and a second wall each oriented vertically, facing each other, and separated from each other by a gap corresponding to a dimension of the battery which dimension is in a direction in which the first wall and the second wall face each other, and the battery is between the first wall and the second wall with the connection section cover attached to a body of the electric work vehicle.

With the above configuration, the first and second walls function to guide the connection section cover as a worker attaches the connection section cover to the body, thereby facilitating the attachment.

The electric work vehicle may preferably be further configured such that the at least one power port includes a plurality of power ports, the at least one connection section includes a plurality of connection sections corresponding to the plurality of power ports and arranged laterally, and the connection section cover is in a form of a single element covering the plurality of connection sections.

With the above configuration, the connection section cover is in the form of a single element covering the connection sections. This reduces the number of parts used, as compared to a configuration with two or more connection section covers corresponding to the respective connection sections.

The electric work vehicle may preferably be further configured such that the plurality of power ports include: an electrical power port; and an electronic power port.

With the above configuration, the connection section cover covers a connection section connected to an electrical power port and a connection section connected to an electronic power port to prevent a worker from accidentally removing not only the connection section connected to an electrical power port but also the connection section connected to an electronic power port.

### Brief Description of Drawings

- Fig. 1: is a left side view of a tractor.
- Fig. 2: is a left side view of components such as a cover member.
- Fig. 3: is a left side view of components such as a lid.
- Fig. 4: is a diagram illustrating how components such as a power feed section are arranged as viewed in the direction in which a charger is connectable to the power feed section.
- Fig. 5: is a partial cutaway plan view of components such as a lid.
- Fig. 6: is a partial cutaway front view of components such as a frame-shaped portion.
- Fig. 7: is a front view of components such as power ports.
- Fig. 8: is a front view of components such as a port cover.
- Fig. 9: is a plan view of components such as a port cover.
- Fig. 10: is a left side view of components such as a port cover.
- Fig. 11: is a right side view of components such as a port cover.
- Fig. 12: is a partial cutaway right side view of components such as a manually operable section.
- Fig. 13: is a perspective view of a first connection section and a first lock mechanism.
- Fig. 14: is a front view of components such as a port cover for a first alternative embodiment.
- Fig. 15: is a left side view of components such as a port cover for the first alternative embodiment.
- Fig. 16: is a right side view of components such as a port cover for the first alternative embodiment.

### Description of Embodiments

The description below deals with an embodiment of the present invention with reference to drawings. Unless otherwise specified, the description below uses terms such as "front" and "forward" to refer to the direction indicated with arrow F in the drawings, terms such as "rear" and "rearward" to refer to the direction indicated with arrow B in the drawings, terms such as "left" and "leftward" to refer to the direction indicated with arrow L in the drawings, terms such as "right" and "rightward" to refer to the direction indicated with arrow R in the drawings, terms such as "above" and "upward" to refer to the direction indicated with arrow U in the drawings, and terms such as "below" and "downward" to refer to the direction indicated with arrow D in the drawings.

### [Overall Configuration of Tractor]

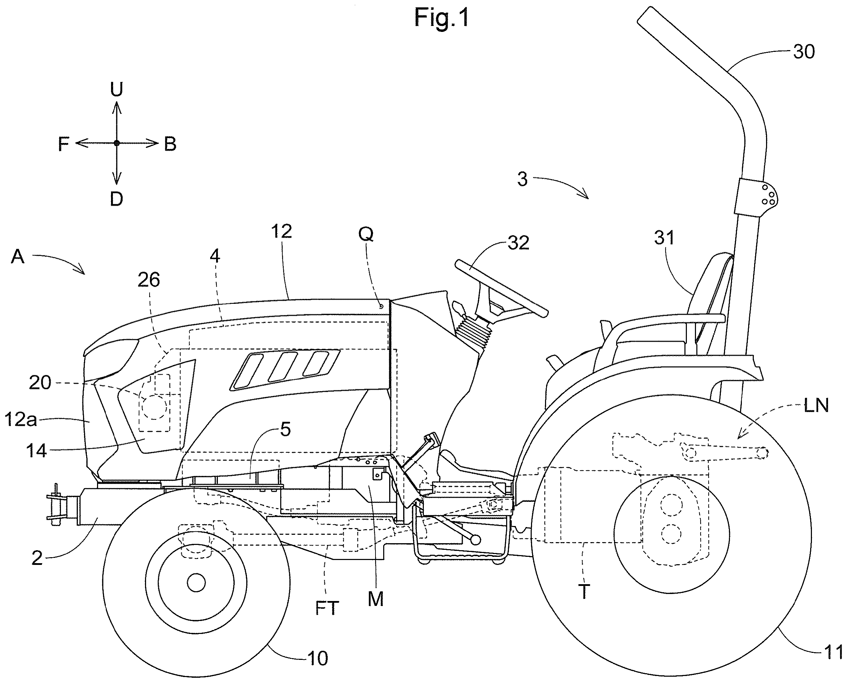

The description below deals with a tractor A as the present embodiment (which corresponds to the "electric work vehicle" of the present invention). Fig. 1 illustrates a tractor A including a pair of left and right front wheels 10 (which corresponds to the "travel device" for the present invention), a pair of left and right rear wheels 11 (which corresponds to the "travel device" for the present invention), and a cover member 12.

The tractor A includes a body frame 2 and a driver section 3. The body frame 2 is supported by the left and right front wheels 10 and the left and right rear wheels 11.

The cover member 12 is at a front portion of the body. The driver section 3 is rearward of the cover member 12. In other words, the cover member 12 is forward of the driver section 3.

The driver section 3 includes a protective frame 30, a driver's seat 31, and a steering wheel 32. An operator (worker) is able to enter the driver section 3 and sit on the driver's seat 31.

The operator operates the steering wheel 32 to turn the front wheels 10 and performs other driving operations in the driver section 3.

The tractor A, in other words, includes a driver section 3 configured to accommodate an operator.

The tractor A includes a battery 4, an inverter 5, a motor M, a transmission device T, and a front transmission mechanism FT.

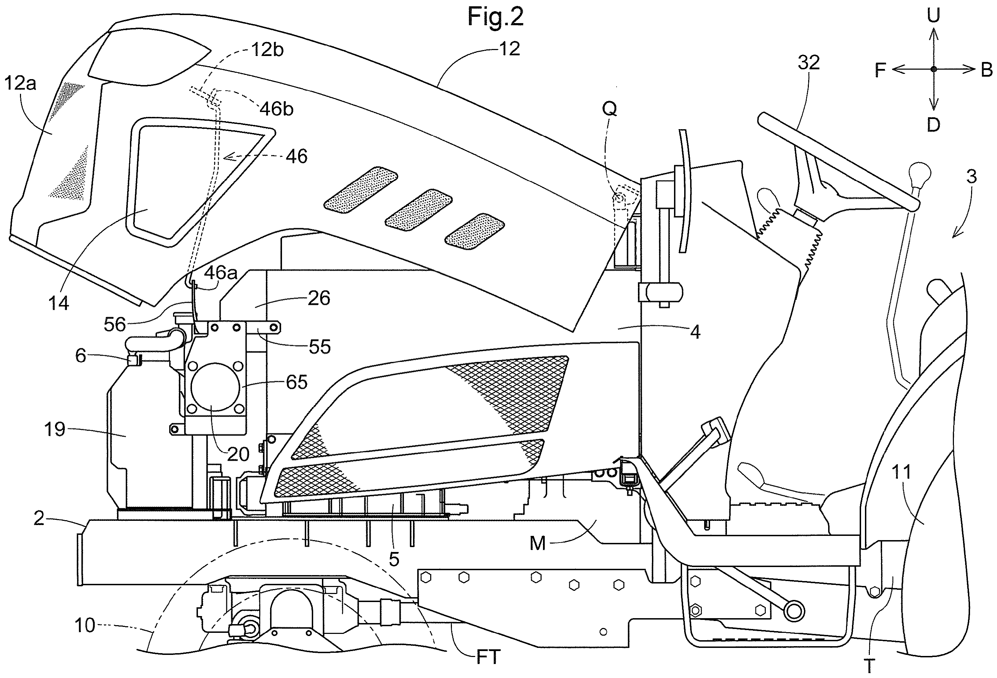

As illustrated in Figs. 1 and 2, the cover member 12 is swingable about a cover swing axis Q (which corresponds to the "swing axis" for the present invention) extending laterally relative to the body. This allows the cover member 12 to be opened and closed. The cover member 12 is, in other words, swingable about a cover swing axis Q extending laterally relative to the body to be opened and closed. As illustrated in Figs. 1 and 2, the cover swing axis Q is at a rear portion of the cover member 12.

The cover member 12, when in the closed state, covers the battery 4. The tractor A, in other words, includes a cover member 12 configured to cover the battery 4. The motor M is under the battery 4.

The battery 4 supplies direct-current electric power to the inverter 5, which then converts the direct-current electric power into alternating-current electric power and supplies the alternating-current electric power to the motor M. The motor M is driven by the alternating-current electric power to transmit its driving force to the transmission device T.

The transmission device T is rearward of the battery 4 and behind the motor M. The front transmission mechanism FT extends forward from the transmission device T. The transmission device T adjusts the driving force from the motor M and transmits the resulting driving force to the rear wheels 11 as well as to the front wheels 10 via the front transmission mechanism FT. This drives the front and rear wheels 10 and 11.

The tractor A, in other words, includes a battery 4 and a motor M drivable by electric power supplied from the battery 4. The tractor A also includes a pair of left and right front wheels 10 and a pair of left and right rear wheels 11 each drivable by the motor M.

As illustrated in Fig. 1, the tractor A includes at a rear portion a link mechanism LN to which a work device (not illustrated in the drawings) such as a tiller is capable of being coupled.

The transmission device T is configured to transmit part of the driving force from the motor M to the work device to drive the work device.

The above configuration allows the tractor A to travel with use of the front and rear wheels 10 and 11 and simultaneously perform work with use of the work device.

### [Power Feed Section and Opening]

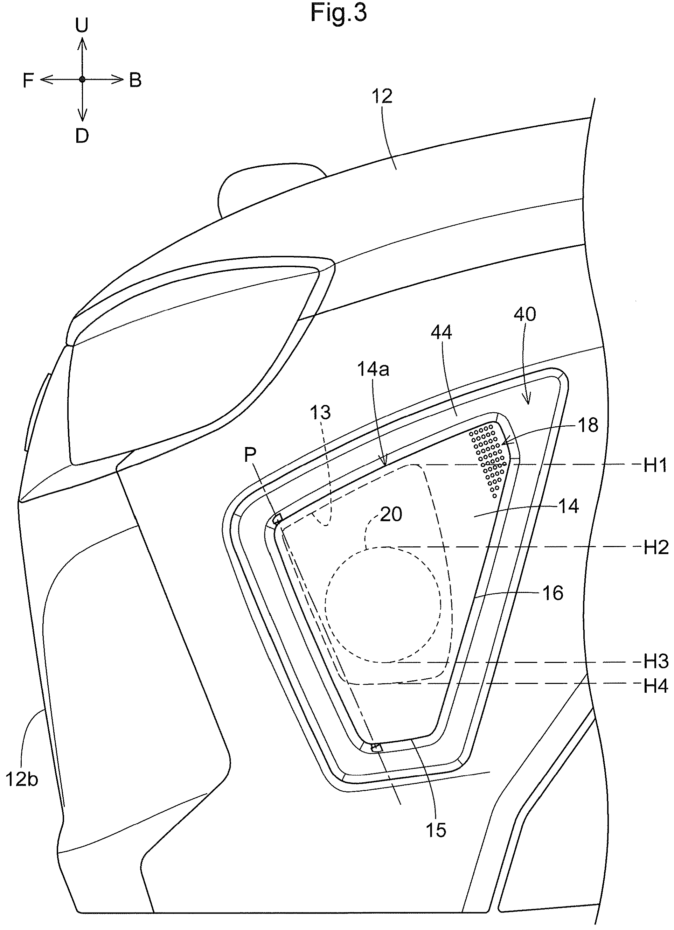

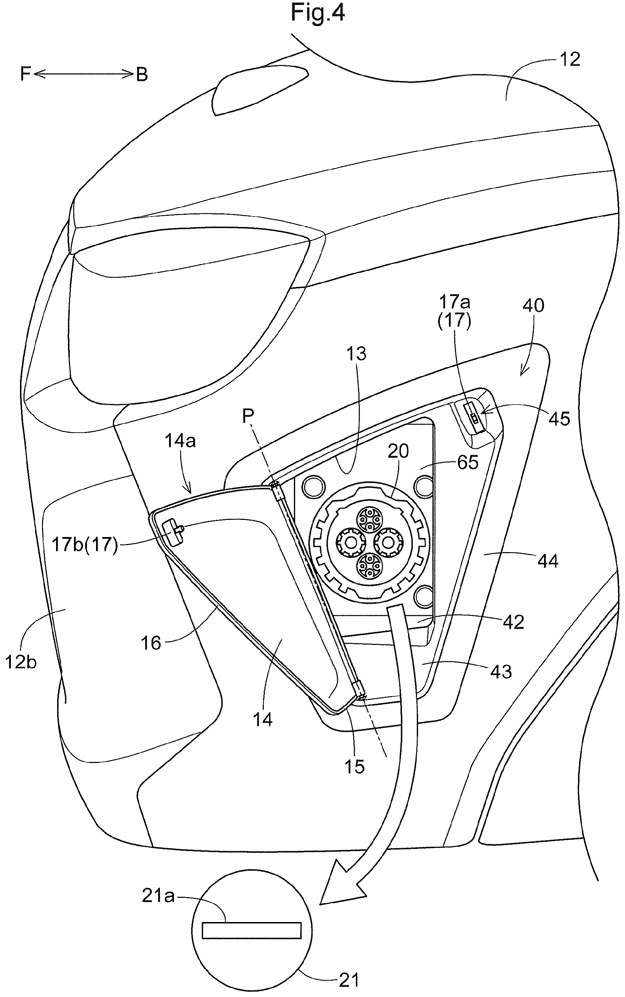

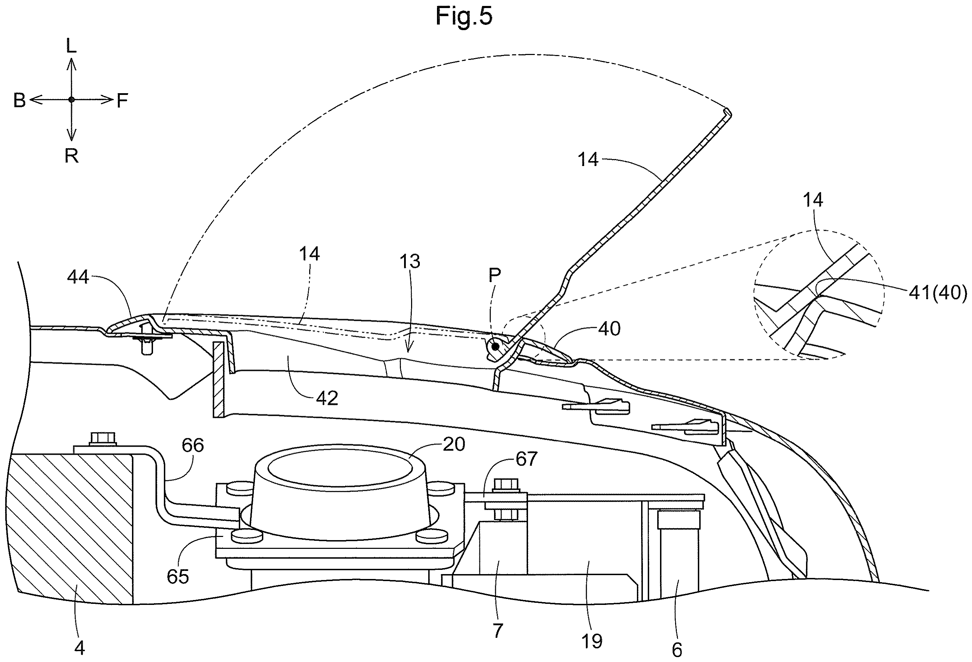

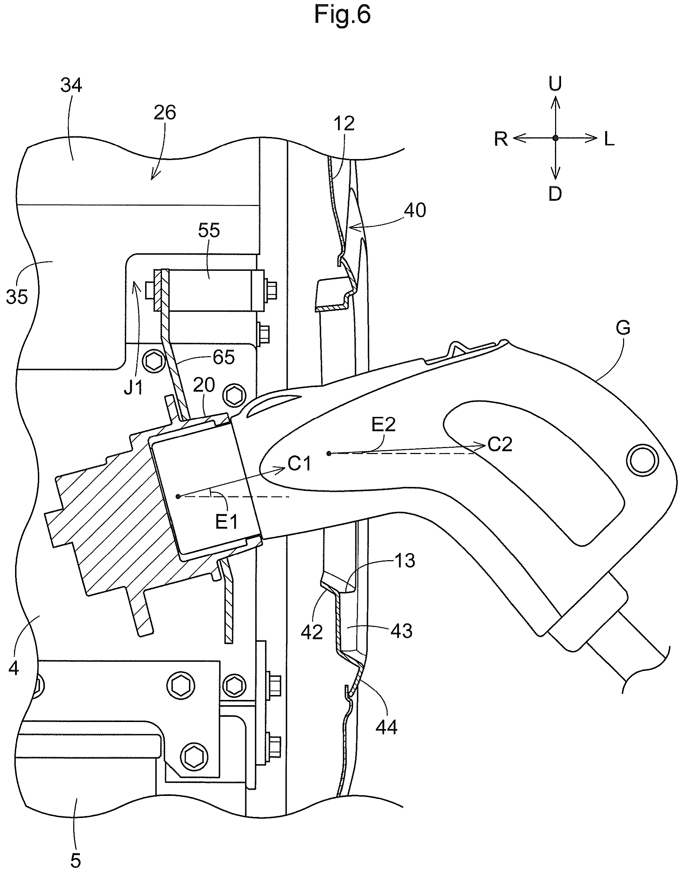

As illustrated in Figs. 3 and 4, the tractor A includes a power feed section 20. As illustrated in Figs. 5 and 6, the cover member 12 is configured to cover the power feed section 20. The tractor A, in other words, includes a cover member 12 configured to cover the battery 4 and the power feed section 20.

The power feed section 20 is forward of the battery 4 and at a front left portion of the space that the cover member 12 is configured to cover. The present invention is, however, not limited to such a configuration. The power feed section 20 may be at any portion of the space that the cover member 12 is configured to cover, for instance, at a front right portion of the space that the cover member 12 is configured to cover.

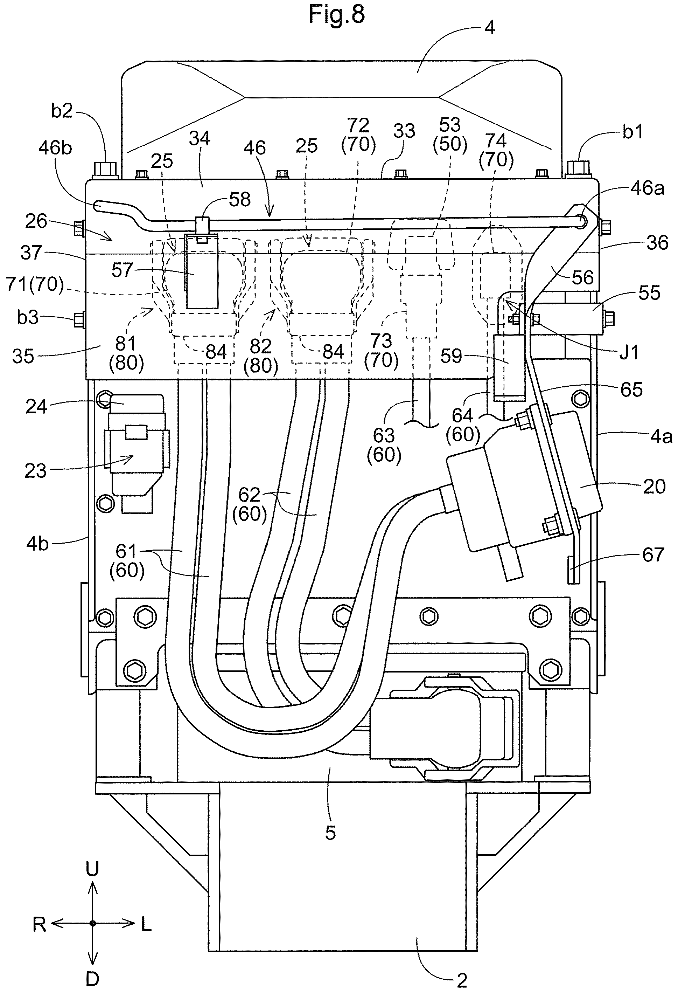

The tractor A includes a first harness 61 (see Fig. 8) through which the power feed section 20 is electrically connected to the battery 4. The power feed section 20 may be provided with a detachably attachable cap 21 as illustrated in Fig. 4. The cap 21 may include a knob 21a that a worker is able to hold.

As illustrated in Figs. 4 to 6, the cover member 12 has in a portion facing the power feed section 20 an opening 13 through which a worker is able to reach the power feed section 20. With the cap 21 provided for the power feed section 20, a worker is able to insert a hand through the opening 13 to attach and detach the cap 21.

The opening 13 for the present embodiment is in a left portion of the cover member 12. The present invention is, however, not limited to such a configuration: The opening 13 may be in a right portion of the cover member 12 if the power feed section 20 is at a front right portion of the space that the cover member 12 is configured to cover. The opening 13 is, in other words, in a left or right portion of the cover member 12.

As illustrated in Fig. 6, the power feed section 20 is configured to receive a charger G provided for a charging station or the like. When a worker has connected the charger G to the power feed section 20, the charger G extends through the opening 13. The charger G and the power feed section 20 may each conform to any standard, for example, CHAdeMO.

The tractor A, in other words, includes a power feed section 20 to which the charger G is connectable and which is electrically connected to the battery 4. More specifically, the tractor A includes a power feed section 20 to which the charger G is connectable and which is electrically connected to the battery 4 with the first harness 61 in-between.

Connecting the charger G to the power feed section 20 allows electric power to be supplied to the battery 4 through the first harness 61, thereby charging the battery 4.

As illustrated in Fig. 6, the power feed section 20 faces in a first direction C1, which is an obliquely upward direction, more specifically, a leftward and upward direction. The power feed section 20, in other words, faces obliquely upward.

As illustrated in Fig. 6, the opening 13 faces in a second direction C2, which is an obliquely upward direction, more specifically, a leftward and upward direction.

The first direction C1 is inclined at a first angle E1 relative to the horizontal direction, whereas the second direction C2 is inclined at a second angle E2 relative to the horizontal direction, the second angle E2 being smaller than the first angle E1. In other words, the opening 13 faces in a direction with a first inclination relative to the horizontal direction, whereas the power feed section 20 faces in a direction with a second inclination relative to the horizontal direction, the first inclination being smaller than the second inclination.

Fig. 3 shows a first height position H1, a second height position H2, a third height position H3, and a fourth height position H4. The first height position H1 is of the upper end of the opening 13. The second height position H2 is of the upper end of the power feed section 20. The third height position H3 is of the lower end of the power feed section 20. The fourth height position H4 is of the lower end of the opening 13.

The second height position H2 is below the first height position H1. In other words, the upper end of the power feed section 20 is below the upper end of the opening 13.

The third height position H3 is above the fourth height position H4. In other words, the lower end of the power feed section 20 is above the lower end of the opening 13.

### [Lid and Frame-shaped Portion]

As illustrated in Figs. 3 to 5, the tractor A includes a lid 14 configured to cover the opening 13. As illustrated in Figs. 3 and 4, the lid 14 is so swingable about a lid swing axis P as to be switched between an open state and a closed state. Fig. 3 illustrates the lid 14 in the closed state, whereas Figs. 4 and 5 each illustrate the lid 14 in the open state. The lid 14 is openable forward.

Opening the lid 14 exposes the opening 13, whereas closing the lid 14 blocks the opening 13. The lid 14 is configured as above to expose and block the opening 13. The tractor A, in other words, includes a lid 14 configured to expose and block the opening 13.

As illustrated in Fig. 3, the lid swing axis P is at a front end portion of the lid 14, meaning that the lid 14 includes a front end portion as a swing base end portion. The lid 14 includes a rear end portion as a swing free end portion.

As illustrated in Fig. 3, the lid swing axis P is inclined in an upper front direction. The lid swing axis P is, in other words, inclined in the direction in which the lid 14 is openable, relative to the vertical direction.

As illustrated in Fig. 3, the lid 14 includes an edge portion 14a including a gently inclined portion 15 and a sharply inclined portion 16. The gently inclined portion 15 and the sharply inclined portion 16 are both inclined in an upper rear direction. The gently inclined portion 15 has an inclination gentler than the inclination of the sharply inclined portion 16.

The gently inclined portion 15 corresponds to a lower end portion of the edge portion 14a. The gently inclined portion 15 includes a rear end portion connected to a front end portion of the sharply inclined portion 16. In other words, the gently inclined portion 15 includes an upper end portion connected to a lower end portion of the sharply inclined portion 16.

With the above configuration, the gently inclined portion 15 is so inclined that a portion thereof closer to the sharply inclined portion 16 is further upward. In other words, the gently inclined portion 15 corresponds to a lower end portion of the edge portion 14a and is so inclined that a portion thereof closer to the sharply inclined portion 16 is further upward. The sharply inclined portion 16 is so inclined that a portion thereof closer to the gently inclined portion 15 is further downward.

As illustrated in Fig. 3, the power feed section 20 is above the gently inclined portion 15 in a side view.

As illustrated in Fig. 4, the cover member 12 includes a frame-shaped portion 40 surrounding the opening 13. In other words, the cover member 12 includes a frame-shaped portion 40 surrounding the opening 13.

Fig. 4 illustrates the lid 14 in the open state and the frame-shaped portion 40 not overlapping with the power feed section 20. As described above, the opening 13 and the power feed section 20 are so positioned that with the lid 14 in the open state, the frame-shaped portion 40 does not overlap with the power feed section 20 as viewed in the direction in which the charger G is connectable to the power feed section 20.

As illustrated in Fig. 5, the frame-shaped portion 40 is configured to be in contact with the lid 14 in the open state. The frame-shaped portion 40 includes a chamfered portion 41 configured to face the lid 14 in the open state. The chamfered portion 41 is shaped with a corner cut off. The chamfered portion 41 may have, for example, a flat or rounded surface.

With the above configuration, the lid 14 in the open state is in contact with the chamfered portion 41.

As illustrated in Fig. 6, the frame-shaped portion 40 includes a wall-shaped extension 42 extending inward of the cover member 12 relative to the opening 13. The extension 42, in other words, extends toward the power feed section 20 relative to the opening 13. The frame-shaped portion 40, in other words, includes an extension 42 extending toward the power feed section 20 relative to the opening 13.

The extension 42 may be in the shape of a cylinder in correspondence with the entire opening 13 or may correspond to only a portion of the opening 13, for example, only a lower portion of the opening 13. In the latter case, the extension 42 may be in the form of a substantially horizontal wall.

As illustrated in Fig. 4, the frame-shaped portion 40 includes a wall-shaped portion 43 at a lower portion. The wall-shaped portion 43 is in the shape of a wall extending upward. With this configuration, the wall-shaped portion 43 extends toward the power feed section 20 as viewed in the direction in which the charger G is connectable to the power feed section 20.

**In** other words, the frame-shaped portion 40 includes a wall-shaped portion 43 extending toward the power feed section 20 as viewed in the direction in which the charger G is connectable to the power feed section 20.

As illustrated in Figs. 3 and 4, the frame-shaped portion 40 includes an outer frame portion 44. As illustrated in Fig. 3, the outer frame portion 44 is in the shape of a frame configured to surround the lid 14 in the closed state in a side view. As illustrated in Figs. 4 and 6, the wall-shaped portion 43 extends upward from a lower portion of the outer frame portion 44.

### [Push Latch]

As illustrated in Fig. 4, the tractor A includes a push latch 17 including a latch body 17a and a receiving portion 17b.

The latch body 17a is attached to a recess 45 in the frame-shaped portion 40. The recess 45 is depressed inward of the cover member 12 and corresponds in position to the free end portion of the lid 14 in the closed state. The latch body 17a thus corresponds in position to the free end portion of the lid 14 in the closed state.

The receiving portion 17b is attached to the free end portion of the lid 14.

With the lid 14 as illustrated in Fig. 4, closing the lid 14 engages the receiving portion 17b with the latch body 17a. This latches the free end portion of the lid 14 to the frame-shaped portion 40 with use of the push latch 17. The tractor A, in other words, includes a push latch 17 configured to latch the free end portion of the lid 14 to the frame-shaped portion 40.

As illustrated in Fig. 3, the lid 14 includes a marker 18 in any form such as two or more small protrusions. The marker 18 is on a surface of the lid 14 which surface corresponds in position to the push latch 17. In other words, the lid 14 includes a marker 18 on a surface corresponding in position to the push latch 17.

Fig. 3 illustrates the free end portion of the lid 14 as latched to the frame-shaped portion 40 with use of the push latch 17. In this state, a worker is able to push the marker 18 of the lid 14 to disengage the receiving portion 17b from the latch body 17a, so that the free end portion of the lid 14 is unlatched from the frame-shaped portion 40.

With the above configuration, the free end portion of the lid 14 is engageable with and disengageable from the frame-shaped portion 40 with use of the push latch 17.

### [Power Ports]

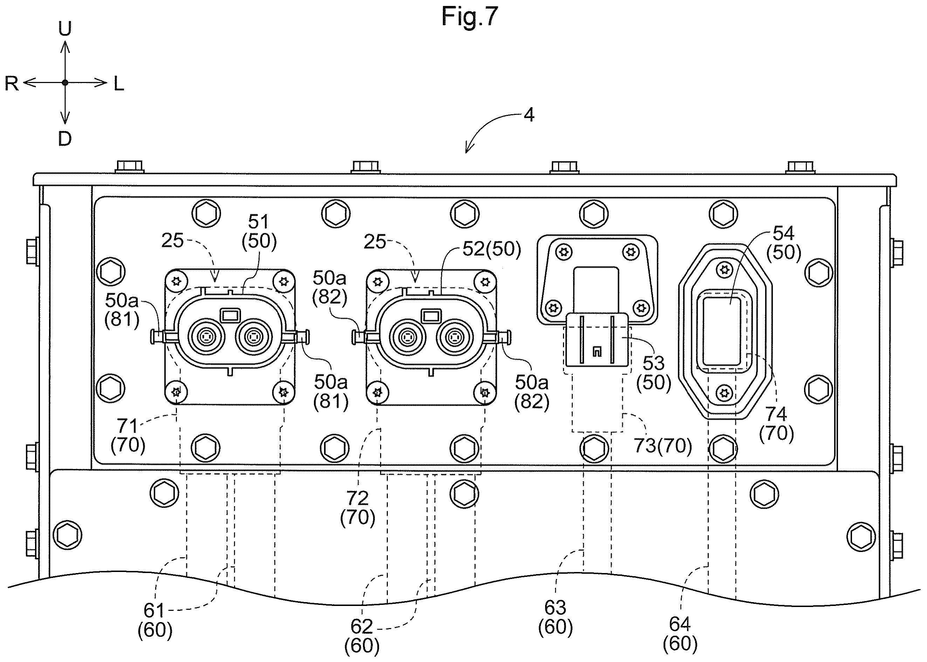

As illustrated in Fig. 7, the battery 4 includes at a front side portion a first port 51, a second port 52, a third port 53, and a fourth port 54 each as a power port 50. The tractor A, in other words, includes power ports 50 at a side portion of the battery 4.

The first port 51 is an input port configured to receive electric power into the battery 4, whereas the second port 52, the third port 53, and the fourth port 54 are each an output port configured to output electric power from the battery 4. In other words, the power ports 50 are each an input port configured to receive electric power into the battery 4 or an output port configured to output electric power from the battery 4.

### [Connection Sections and Electric Wires]

As illustrated in Figs. 7 and 8, the battery 4 includes four connection sections 70 connected to the respective power ports 50. More specifically, the battery 4 includes a first connection section 71 connected to the first port 51 from forward, a second connection section 72 connected to the second port 52 from forward, a third connection section 73 connected to the third port 53 from below, and a fourth connection section 74 connected to the fourth port 54 from forward.

The first connection section 71, the second connection section 72, the third connection section 73, and the fourth connection section 74 are each a connection section 70, and are arranged laterally.

As described above, the tractor A includes two or more power ports 50 and two or more connection sections 70 corresponding to the respective power ports 50 and arranged laterally.

As illustrated in Figs. 7 and 8, the battery 4 includes electric wires 60 each having an end at which the corresponding connection section 70 is disposed. The electric wires 60 are each electrically connected to the corresponding power port 50 through the corresponding connection section 70. The tractor A, in other words, includes electric wires 60 electrically connected to the respective power ports 50. The tractor A also includes connection sections 70 each disposed at an end of the corresponding electric wire 60 and connected to the corresponding power port 50.

More specifically, the tractor A includes a first harness 61, a second harness 62, a third harness 63, and a fourth harness 64 each as an electric wire 60.

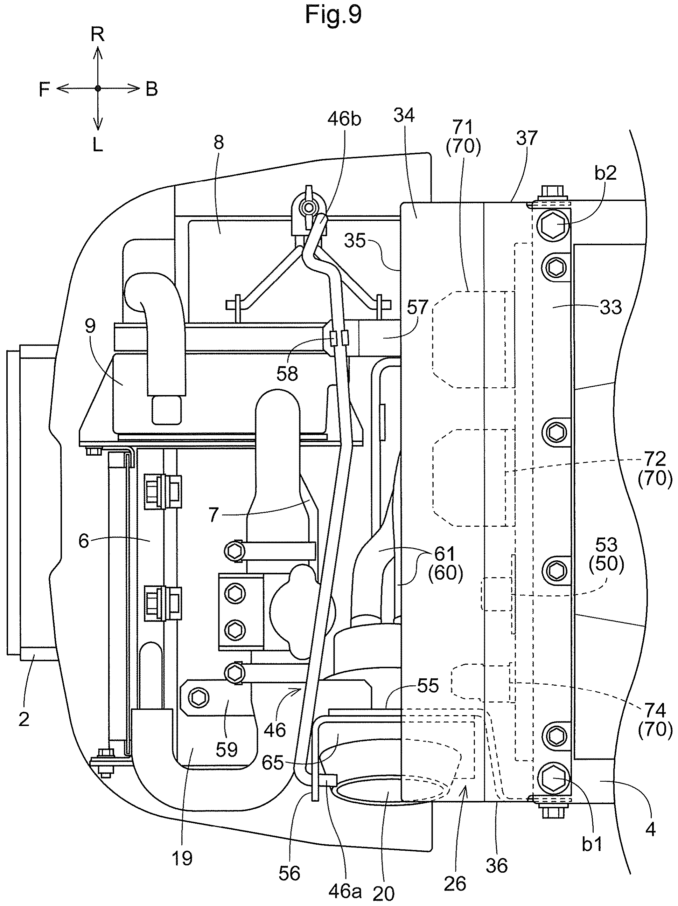

The description below deals with the configuration of a front portion of the body of the tractor A. As illustrated in Figs. 9 to 11, the tractor A includes at a front portion of the body a radiator 6, a cooling fan 7, an auxiliary battery 8, a voltage converter 9, a reserve tank (not illustrated in the drawings), and an oil cooler (not illustrated in the drawings), which are all covered by the cover member 12 in the closed state.

The reserve tank is configured to store coolant. The tractor A includes a coolant path including a radiator 6 and a water pump (not illustrated in the drawings) configured to force coolant to circulate through the coolant path. The coolant is cooled by the radiator 6 as it passes therethrough.

The tractor A includes a radiator frame 19 holding the radiator 6 and in the shape of an arch surrounding the radiator 6 at left and right side portions. The tractor A, in other words, includes a radiator 6 and a radiator frame 19 holding the radiator 6.

The cooling fan 7 is rearward of the radiator 6 and is configured to blow cooling air rearward. This causes outside air to enter the cover member 12 through an outside air introducing section 12a (see Fig. 2) at a front portion of the cover member 12 and pass through the radiator 6, thereby cooling the radiator 6.

The auxiliary battery 8 is configured to supply electric power to various auxiliaries. The battery 4 transmits electric power to the voltage converter 9, which then steps down the voltage of the electric power and supplies the resulting electric power to the auxiliary battery 8.

The oil cooler is configured to cool operating fluid of the tractor A as it passes through the oil cooler.

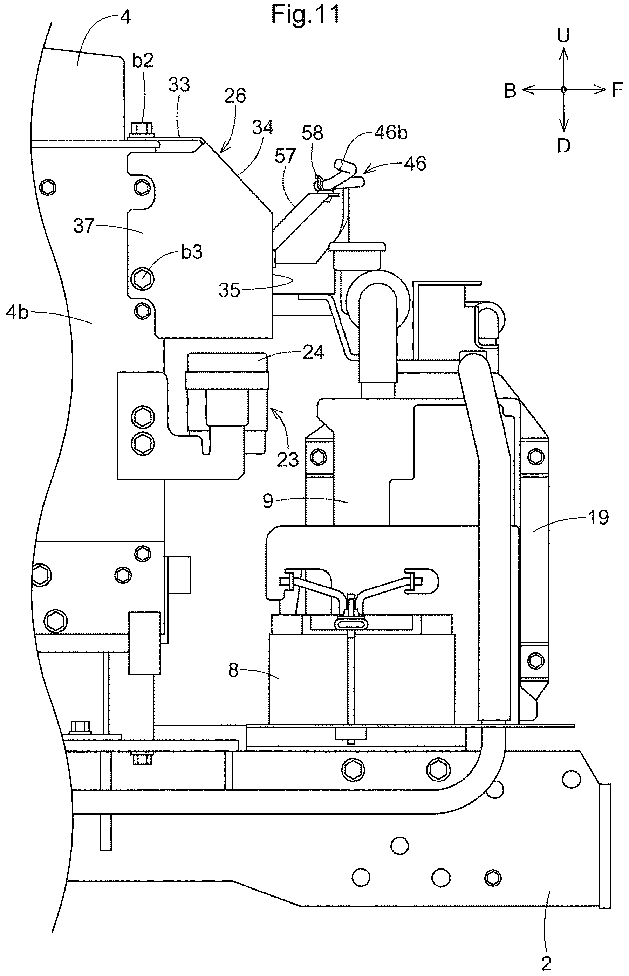

As illustrated in Figs. 8 and 11, the tractor A includes a fuse box 23 forward of the battery 4 and a box cover 24 above the fuse box 23. A worker is able to remove the box cover 24 upward to reach into the fuse box 23.

As illustrated in Fig. 8, the first connection section 71 is at a first end of the first harness 61, whose second end is connected to the power feed section 20. Connecting the charger G (see Fig. 6) to the power feed section 20 allows electric power to be supplied to the battery 4 through the power feed section 20, the first harness 61, and the first connection section 71, thereby charging the battery 4. In other words, the first port 51 is an electric power port 50 for strong electricity.

The second connection section 72 is at a first end of the second harness 62, whose second end is connected to the inverter 5. The battery 4 supplies electric power through the second connection section 72 and the second harness 62 to the inverter 5. **In** other words, the second port 52 is an electric power port 50 for strong electricity.

The third connection section 73 is at a first end of the third harness 63, whose second end is connected to the voltage converter 9. The battery 4 supplies electric power through the third connection section 73 and the third harness 63 to the voltage converter 9. In other words, the third port 53 is an electric power port 50 for strong electricity.

The fourth connection section 74 is at a first end of the fourth harness 64, whose second end is connected to, for example, an electronic controller of the tractor A such as an electronic control unit (ECU). The battery 4 supplies electric power through the fourth connection section 74 and the fourth harness 64 to the electronic controller. **In** other words, the fourth port 54 is an electric power port 50 for weak electricity.

As described above, the power ports 50 illustrated in Fig. 7 include the electric power port 50 for strong electricity and the electric power port 50 for weak electricity.

### [Lock Mechanisms]

As illustrated in Figs. 8, 12, and 13, the tractor A includes lock mechanisms 80. The lock mechanisms 80 are configured to lock the respective connection sections 70 as connected to the respective power ports 50. The tractor A, in other words, includes lock mechanisms 80 configured to lock the respective connection sections 70 as connected to the respective power ports 50.

More specifically, the lock mechanisms 80 include a first lock mechanism 81 configured to lock the first connection section 71 as connected to the first port 51 and a second lock mechanism 82 configured to lock the second connection section 72 as connected to the second port 52. The first and second lock mechanisms 81 and 82 are both lock mechanisms 80.

The first and second lock mechanisms 81 and 82 share an identical structure. The description below deals with how the first lock mechanism 81 is structured in detail. The description below of the structure of the first lock mechanism 81 applies similarly to that of the second lock mechanism 82.

As illustrated in Figs. 7, 12, and 13, the first lock mechanism 81 includes a pair of left and right protrusions 50a, a manually operable section 84, and a slidable section 89. As illustrated in Fig. 7, the protrusions 50a protrude laterally from the first port 51. The second lock mechanism 82 includes a pair of left and right protrusions 50a protruding laterally from the second port 52.

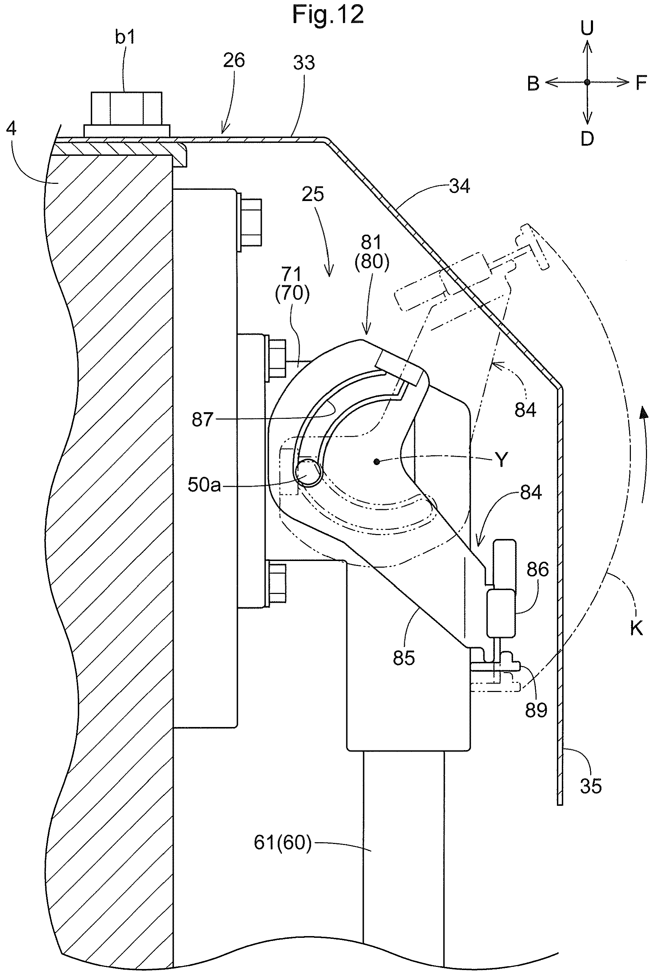

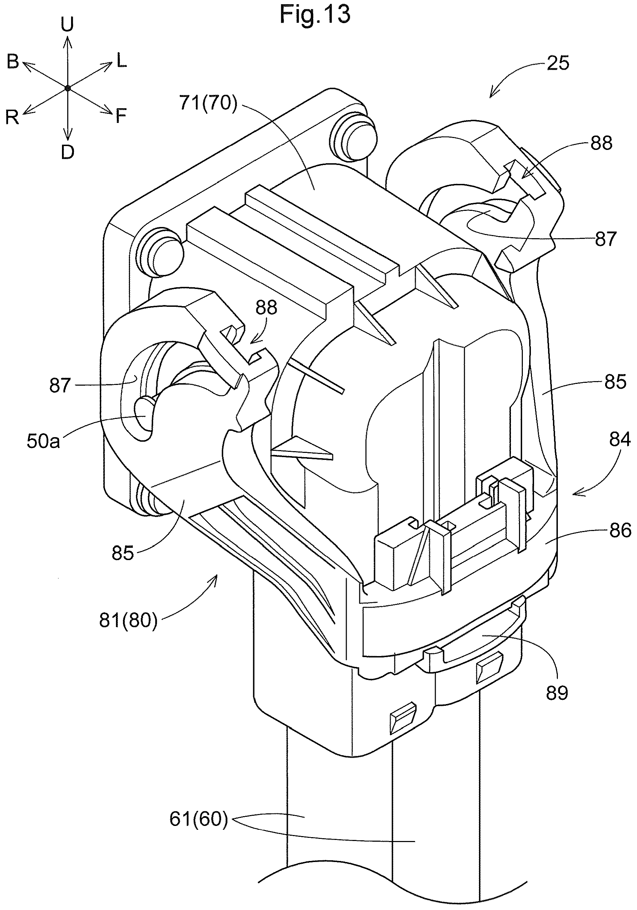

As illustrated in Figs. 12 and 13, the manually operable section 84 includes a pair of left and right arms 85 and a coupler 86. The arms 85 extend in the front-rear direction. The arms 85 include respective front end portions coupled to each other by the coupler 86. The coupler 86 extends laterally. The arms 85 and the coupler 86 may be an integral whole or separate from each other.

The arms 85 each have a groove 87 and a hole 88. As illustrated in Fig. 12, the groove 87 is in the shape of an arc with a lateral operation axis Y as the center. As illustrated in Fig. 13, the hole 88 is in an upper end portion of the arm 85 and is connected to the groove 87.

As illustrated in Figs. 12 and 13, the protrusions 50a are in the respective grooves 87. The manually operable section 84 is swingable about the operation axis Y with the protrusions 50a in the respective grooves 87. The manually operable section 84 is so swingable about the operation axis Y as to be switched between a first position and a second position. Fig. 12 illustrates the manually operable section 84 in the first position with a solid line and the manually operable section 84 in the second position with an imaginary line.

As illustrated in Fig. 12, the slidable section 89 is slidable vertically. The slidable section 89 is so slidable vertically as to be switched between a fixed position and a released position. Fig. 12 illustrates the slidable section 89 in the fixed position with a solid line and the slidable section 89 in the released position with an imaginary line.

With the manually operable section 84 in the first position and the slidable section 89 in the fixed position, the first lock mechanism 81 is in a locking state, in which the first lock mechanism 81 locks the corresponding connection section 70 as connected to the corresponding power port 50.

The slidable section 89 is configured to, with the first lock mechanism 81 in the locking state, prevent the manually operable section 84 from swinging. **In** other words, in the locking state, the slidable section 89 prevents the manually operable section 84 from swinging. In this state, sliding the slidable section 89 into the released position enables the manually operable section 84 to swing. A worker is able to swing the manually operable section 84 into the second position to bring the first lock mechanism 81 into an unlocking state, in which the first lock mechanism 81 allows the corresponding connection section 70 to be removed from the corresponding power port 50.

**In** other words, the lock mechanisms 80 are each switchable in response to an operation of the corresponding manually operable section 84 into a locking state, in which the lock mechanism 80 locks the corresponding connection section 70 as connected to the corresponding power port 50, and an unlocking state, in which the lock mechanism 80 allows the corresponding connection section 70 to be removed from the corresponding power port 50.

**In** the unlocking state, pulling the manually operable section 84 together with the first connection section 71 forward causes the protrusions 50a to pass through the respective holes 88 and out of the respective grooves 87.

As illustrated in Figs. 7, 8, 12, and 13, the tractor A includes two or more wire structures 25 each including a power port 50, an electric wire 60, a connection section 70, a lock mechanism 80, and a manually operable section 84.

**In** other words, the present embodiment includes two or more wire structures 25 each including a power port 50, an electric wire 60, a connection section 70, a lock mechanism 80, and a manually operable section 84.

More specifically, the present embodiment includes two wire structures 25, one of which includes a first port 51, a first harness 61, a first connection section 71, and a first lock mechanism 81 including a manually operable section 84, and the other of which includes a second port 52, a second harness 62, a second connection section 72, and a second lock mechanism 82 including a manually operable section 84.

The tractor A does not necessarily include two wire structures 25, and may include one wire structure 25 or three or more wire structures 25.

As illustrated in Fig. 8, the present embodiment is configured such that the manually operable sections 84 are arranged laterally. More specifically, the tractor A includes two laterally arranged manually operable sections 84, one of which is included in the first lock mechanism 81, and the other of which is included in the second lock mechanism 82.

The tractor A does not necessarily include two manually operable sections 84, and may include one manually operable section 84 or three or more manually operable sections 84.

### [Port Cover]

As illustrated in Fig. 8, the tractor A includes a port cover 26 (which corresponds to the "restrictor" and "connection section cover" for the present invention) in the form of a single bent plate. As illustrated in Figs. 8 and 9, the port cover 26 covers the first connection section 71, the second connection section 72, the third connection section 73, and the fourth connection section 74.

**In** other words, the port cover 26 is in the form of a single element covering the connection sections 70. The port cover 26 serves as a connection section cover covering the connection sections 70. In other words, the tractor A includes a port cover 26 covering the connection sections 70.

As illustrated in Fig. 12, the port cover 26 is open downward.

As illustrated in Figs. 8 to 12, the port cover 26 includes an upper wall 33, an inclined portion 34, a front wall 35, a left wall 36 (which corresponds to the "first wall" for the present invention), and a right wall 37 (which corresponds to the "second wall" for the present invention).

The upper wall 33 is in the form of a horizontal wall. The inclined portion 34 is in the form of a wall extending from a front end portion of the upper wall 33 in a forward and downward direction. With the inclined portion 34, the port cover 26 has an inclined upper surface.

The front wall 35 is in the form of a wall extending downward from a lower end portion of the inclined portion 34. The left wall 36 and the right wall 37 are each in the form of a vertical wall.

**In** other words, the port cover 26 includes a left wall 36 and a right wall 37 each oriented vertically.

The left wall 36 and the right wall 37 face each other, and are separated from each other by a gap corresponding to the dimension of the battery 4 in the direction in which the left wall 36 and the right wall 37 face each other, the direction being a lateral direction for the present embodiment.

As illustrated in Figs. 8, 10, and 11, with the port cover 26 attached to the body of the tractor A, the left wall 36 is in contact with a left wall 4a of the battery 4, whereas the right wall 37 is in contact with a right wall 4b of the battery 4. In other words, with the port cover 26 attached to the body, the battery 4 is between the left wall 36 and the right wall 37.

The upper wall 33 is above and on a front end portion of the battery 4. In other words, the port cover 26 includes an upper portion above and on the battery 4.

As illustrated in Figs. 8 and 9, the upper wall 33 includes a left end portion fixed to the battery 4 with use of a first bolt b1 (which corresponds to the "fixing section" for the present invention) and a right end portion fixed to the battery 4 with use of a second bolt b2 (which corresponds to the "fixing section" for the present invention). As illustrated in Fig. 11, the right wall 37 includes a rear end portion fixed to the battery 4 with use of a third bolt b3 (which corresponds to the "fixing section" for the present invention). The first bolt b1, the second bolt b2, and the third bolt b3 are attachable and detachable with use of a tool (such as a spanner or a wrench).

**In** other words, the port cover 26 is fixed to the body with use of the first bolt b1, the second bolt b2, and the third bolt b3 each attachable and detachable with use of the tool. The port cover 26 is fixed to the battery 4 with use of the first bolt b1, the second bolt b2, and the third bolt b3, so that the port cover 26 is supported by the battery 4.

As illustrated in Fig. 12, the front wall 35 is within the operation range K of the manually operable section 84 of each of the first lock mechanism 81 and the second lock mechanism 82. In other words, the front wall 35 extends over the respective operation ranges K of the respective manually operable sections 84 of the first and second lock mechanisms 81 and 82.

As described above, the tractor A includes a port cover 26 within the operation range K of each manually operable section 84. The port cover 26 is in the form of a single element extending over the respective operation ranges K of two or more manually operable sections 84.

As illustrated in Figs. 8 and 11, the fuse box 23 is below and near the port cover 26. The box cover 24 may be configured to come into contact with the port cover 26 when a worker tries to remove the box cover 24 upward with the port cover 26 attached to the body. This may render it difficult or impossible to remove the box cover 24 with the port cover 26 attached to the body.

### [Support Arm]

As illustrated in Figs. 2 and 9, the tractor A includes a support arm 46. With the cover member 12 in the closed state, the support arm 46 is covered by the cover member 12.

The tractor A, in other words, includes a support arm 46 covered by the cover member 12.

As illustrated in Fig. 2, the cover member 12 includes an arm engagement section 12b.

The support arm 46 includes a base end portion 46a and is swingable upward and downward about the base end portion 46a. With the cover member 12 in the open state, erecting the support arm 46 and engaging a free end portion 46b thereof with the arm engagement section 12b brings the free end portion 46b into contact with the cover member 12 from below, so that the support arm 46 supports the cover member 12 in the open state.

As described above, the support arm 46 includes a base end portion 46a and is swingable upward and downward about the base end portion 46a. Erecting the support arm 46 and bringing the free end portion 46b thereof into contact with the cover member 12 from below results in the support arm 46 supporting the cover member 12 in the open state.

As illustrated in Figs. 8 to 10, the tractor A includes a first stay 55 and a second stay 56. The first stay 55 is in a zigzag shape and extends from a front left end portion of the battery 4 toward the right side. The first stay 55 includes a rear end portion fixed to the battery 4 and a front end portion connected to the second stay 56.

The second stay 56 extends vertically and is curved. The second stay 56 includes a lower end portion connected to the front end portion of the first stay 55 and an upper end portion to which the base end portion 46a of the support arm 46 is connected in such a manner that the support arm 46 is rotatable relative to the second stay 56. The base end portion 46a of the support arm 46 is thus held by the front left end portion of the battery 4 with the second stay 56 and the first stay 55 in-between.

As illustrated in Figs. 8 to 10, the tractor A includes a third stay 57 extending from the front wall 35 in a forward and upward direction. The tractor A includes a holder 58 supported by an upper end portion of the third stay 57 and configured to hold the support arm 46 so that the support arm 46 is horizontal. A worker is able to remove the support arm 46 from the holder 58 to erect the support arm 46.

The above configuration allows the support arm 46 to be held by the front wall 35 with the holder 58 and the third stay 57 in-between. In other words, the support arm 46 is configured to be held by the port cover 26.

As illustrated in Figs. 8 to 10, the tractor A includes a fourth stay 59 extending in the front-rear direction. The fourth stay 59 includes a rear end portion connected to the front end portion of the first stay 55 and a front end portion supported by the radiator frame 19.

### [Structure for Supporting Power Feed Section]

As illustrated in Figs. 8 to 10, the tractor A includes a holding frame 65 holding the power feed section 20. The holding frame 65 is in the form of a bent plate through which the power feed section 20 extends.

The holding frame 65 includes an upper end portion held by the first stay 55. The tractor A includes a fifth stay 66 holding a rear end portion of the holding frame 65 and a sixth stay 67 holding a lower front end portion of the holding frame 65.

As illustrated in Fig. 5, the fifth stay 66 is in a zigzag shape and extends from a left front end portion of the battery 4 toward the right side. The fifth stay 66 includes a rear end portion fixed to the battery 4 and a front end portion connected to the holding frame 65.

As illustrated in Figs. 5, 8, and 10, the sixth stay 67 extends in the front-rear direction, and includes a rear end portion connected to the holding frame 65 and a front end portion connected to the radiator frame 19.

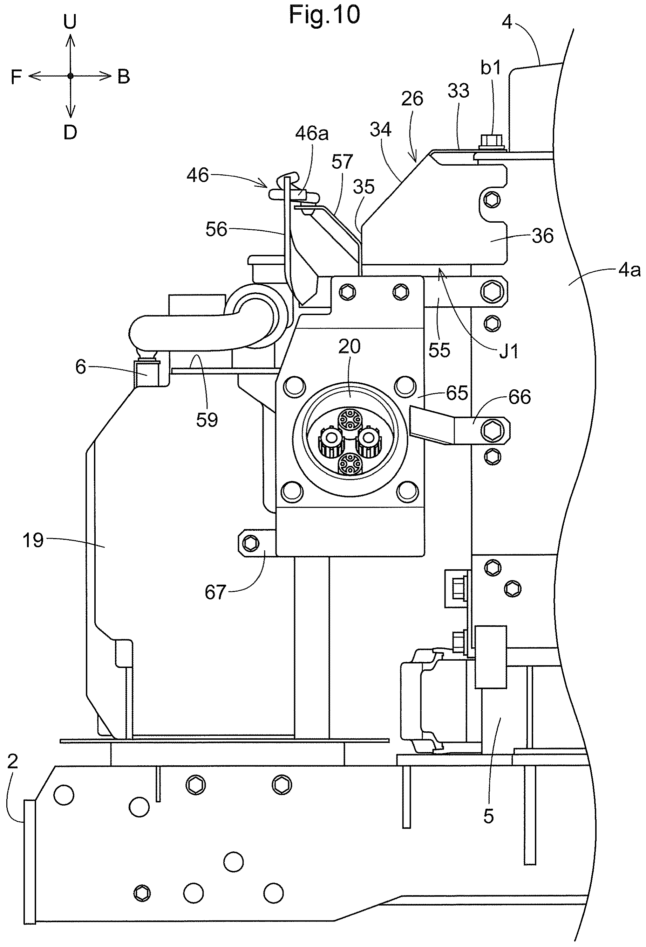

As illustrated in Figs. 8 and 10, the port cover 26 has a cutout J1 extending from a lower left portion of the front wall 35 to a lower portion of the left wall 36. The first stay 55 and the holding frame 65 are in the cutout J1.

As illustrated in Fig. 8, the front wall 35 extends further below than the respective lower ends of the first and second connection sections 71 and 72.

With the above configuration, the lock mechanisms 80 are configured to lock the respective connection sections 70 as connected to the respective power ports 50. This requires a worker to operate a manually operable section 84 to remove the corresponding connection section 70 from the corresponding power port 50. This in turn prevents a worker from accidentally removing a connection section 70 from the corresponding power port 50, as compared to a configuration including no lock mechanism 80 or manually operable section 84.

With the above configuration, the tractor A includes a port cover 26 within the operation range K of each manually operable section 84. The port cover 26 is fixed to the body with use of a first bolt b1, a second bolt b2, and a third bolt b3 each attachable and detachable with use of a tool. This requires a worker to remove the first bolt b1, the second bolt b2, and the third bolt b3 with use of the tool and remove the port cover 26 to operate a manually operable section 84. This in turn prevents a worker from accidentally operating a manually operable section 84.

As described above, the tractor A is configured to prevent a worker from accidentally removing a connection section 70 at an end of an electric wire 60 from the corresponding power port 50.

### [First Alternative Embodiment]

The embodiment described above includes a port cover 26 in the form of a single element.

The present invention is, however, not limited to such a configuration. The description below deals with a first alternative embodiment of the present invention mainly in terms of how the first alternative embodiment differs from the embodiment described above. The first alternative embodiment is similar in configuration to the embodiment described above except for the portions described below. Any element of the first alternative embodiment that is similar to a corresponding element of the embodiment described above is assigned with the same reference sign.

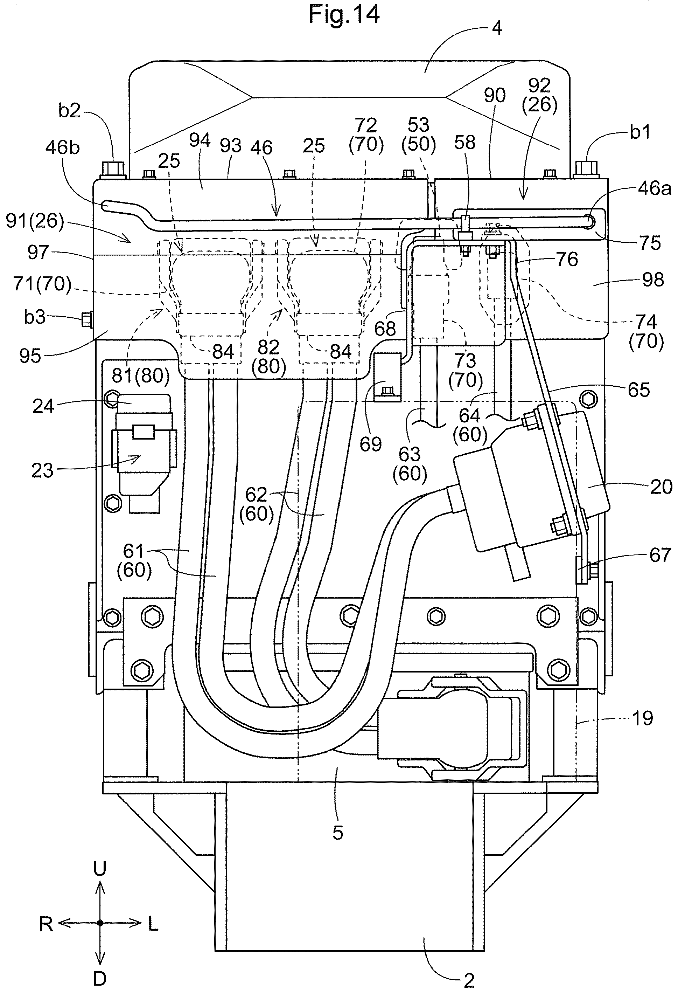

As illustrated in Figs. 14 to 16, the first alternative embodiment includes a port cover 26 divided into two cover sections, namely, a first cover section 91 and a second cover section 92. The present invention is, however, not limited to such a configuration: The port cover 26 may be divided into three or more cover sections.

**In** other words, the port cover 26 is divided into two or more cover sections.

The first cover section 91 and the second cover section 92 are arranged laterally such that the first cover section 91 is to the right of the second cover section 92.

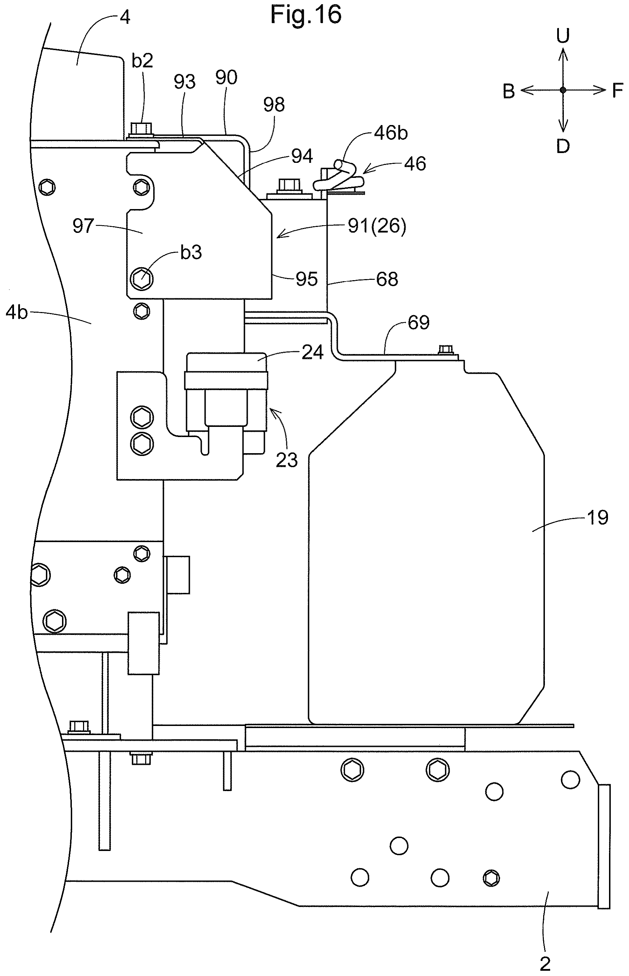

As illustrated in Figs. 14 and 16, the first cover section 91 includes an upper wall 93, an inclined portion 94, a front wall 95, and a right wall 97.

The upper wall 93 is in the form of a horizontal wall. The inclined portion 94 is in the form of a wall extending from a front end portion of the upper wall 93 in a forward and downward direction. With the inclined portion 94, the first cover section 91 has an inclined upper surface.

The front wall 95 is in the form of a wall extending downward from a lower end portion of the inclined portion 94. The right wall 97 is in the form of a vertical wall.

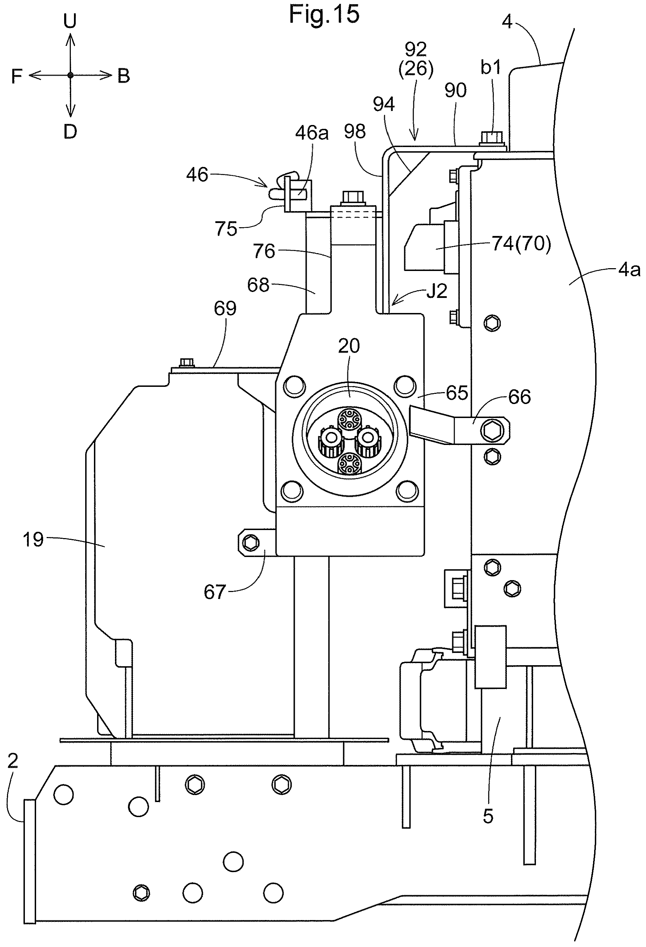

As illustrated in Figs. 14 and 15, the second cover section 92 includes an upper wall 90 and a front wall 98. The upper wall 90 is in the form of a horizontal wall. The front wall 98 is in the form of a wall extending downward from a front end portion of the upper wall 90.

The first cover section 91 and the second cover section 92 are each open downward. The second cover section 92 is open leftward as well.

The first cover section 91 covers the first connection section 71 and the second connection section 72, whereas the second cover section 92 covers the third connection section 73 and the fourth connection section 74.

The first cover section 91 is fixed to the battery 4 with use of a second bolt b2 and a third bolt b3, whereas the second cover section 92 is fixed to the battery 4 with use of a first bolt b1.

The tractor A as the first alternative embodiment includes a seventh stay 68, an eighth stay 69, and a ninth stay 75. As illustrated in Figs. 14 to 16, the seventh stay 68 is in the shape of a step in a front view and is fixed to the front face of the front wall 98.

The eighth stay 69 extends in the front-rear direction, and includes a rear portion fixed to a lower end portion of the seventh stay 68 and a front portion fixed to the radiator frame 19.

With the above configuration, the second cover section 92 is supported by the radiator frame 19 with the seventh stay 68 and the eighth stay 69 in-between. In other words, the port cover 26 is supported by the radiator frame 19.

The seventh stay 68 includes an upper end portion supporting the holder 58 and the ninth stay 75. The ninth stay 75 extends laterally, and includes a right portion fixed to an upper end portion of the seventh stay 68 and a left end portion to which the base end portion 46a of the support arm 46 is connected in such a manner that the support arm 46 is rotatable relative to the ninth stay 75.

As illustrated in Figs. 14 and 15, the first alternative embodiment includes a holding frame 65 including a supportive extension 76 extending upward. The supportive extension 76 includes an upper end portion fixed to the seventh stay 68.

With the above configuration, the power feed section 20 is held by the second cover section 92 with the holding frame 65 and the seventh stay 68 in-between. In other words, the power feed section 20 is held by the port cover 26.

As illustrated in Fig. 15, the holding frame 65 has a cutout J2 at an upper rear end portion. The front wall 98 is in the cutout J2.

### Other Alternative Embodiments

(1) The power ports 50 may be at a rear, right, or left side portion of the battery 4.
(2) The lock mechanisms 80 may each exclude the corresponding manually operable section 84.
(3) The tractor A may include an engine, and may, in this case, be configured to cause the motor M and the engine to drive the front and rear wheels 10 and 11.
(4) The cover member 12 may be at a position other than forward of the driver section 3, for example, rearward of the driver section 3.
(5) The power feed section 20 may be above the sharply inclined portion 16 in a side view.
(6) The lid 14 may have any shape; for instance, the edge portion 14a of the lid 14 may exclude the gently inclined portion 15 and the sharply inclined portion 16.
(7) The lid 14 may be switchable between the open state and the closed state in a manner other than a swing; for instance, the lid 14 may be slidable in the front-rear direction or vertically relative to the body to be switched between the open state and the closed state.
(8) The port cover 26 may exclude the upper wall 33 and/or the inclined portion 34; in other words, the port cover 26 may be open upward.
(9) The port cover 26 may be fixed to a portion of the body other than the battery 4 with use of the first bolt b1, the second bolt b2, and the third bolt b3.
(10) The tractor A may include instead of the port cover 26 a swing restrictor within the operation range K of each manually operable section 84. The swing restrictor may not cover the connection sections 70. The swing restrictor is preferably fixed to the body with use of a fixing section (such as a bolt) attachable and detachable with use of a tool (such as a spanner or a wrench). The swing restrictor, in this case, corresponds to the "restrictor" for the present invention.
(11) The support arm 46 may not be held by the port cover 26.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is not limited to those embodiments, and may be altered as appropriate, as long as such an alteration does not result in a failure to attain an object of the present invention.

### Industrial Applicability

The present invention is applicable to not only tractors but also various electric work vehicles such as combines, rice transplanters, and construction machineries.

### Reference Signs List

- 4: Battery
- 6: Radiator
- 10: Front wheel (travel device)
- 11: Rear wheel (travel device)
- 12: Cover member
- 19: Radiator frame
- 20: Power feed section
- 25: Wire structure
- 26: Port cover (restrictor, connection section cover)
- 36: Left wall (first wall)
- 37: Right wall (second wall)
- 46: Support arm
- 46a: Base end portion
- 46b: Free end portion
- 50: Power port
- 60: Electric wire
- 70: Connection section
- 80: Lock mechanism
- 84: Manually operable section
- A: Tractor (electric work vehicle)
- b1: First bolt (fixing section)
- b2: Second bolt (fixing section)
- b3: Third bolt (fixing section)
- G: Charger
- K: Operation range
- M: Motor
- Q: Cover swing axis (swing axis)

## Claims

1. An electric work vehicle, comprising:
- a battery;
- a motor drivable by electric power supplied from the battery;
- a travel device drivable by the motor;
- at least one power port at a side portion of the battery,
the at least one power port being an input port configured to receive electric power into the battery or an output port configured to output electric power from the battery;
- at least one electric wire electrically connected to the at least one power port;
- at least one connection section disposed at an end of the at least one electric wire and connected to the at least one power port;
- at least one lock mechanism configured to lock the at least one connection section with the at least one connection section connected to the at least one power port, the at least one lock mechanism including at least one manually operable section and being switchable in response to an operation of the at least one manually operable section between a locking state, in which the at least one lock mechanism locks the at least one connection section with the at least one connection section connected to the at least one power port, and an unlocking state, in which the at least one lock mechanism allows the at least one connection section to be removed from the at least one power port; and
- a restrictor disposed within an operation range of the at least one manually operable section,
the restrictor being fixed to a body of the electric work vehicle with use of a fixing section attachable and detachable with use of a tool.

2. The electric work vehicle according to claim 1, wherein the restrictor is fixed to the battery with use of the fixing section.

3. The electric work vehicle according to claim 1 or 2, wherein the restrictor includes a connection section cover covering the at least one connection section.

4. The electric work vehicle according to claim 3, wherein the restrictor is open downward.

5. The electric work vehicle according to any one of claims 1 to 4, wherein the restrictor has an inclined upper surface.

6. The electric work vehicle according to any one of claims 1 to 5, further comprising a plurality of wire structures including the power port, the electric wire, the connection section, the lock mechanism and the manually operable section,
- the manually operable sections are arranged laterally, and
- the restrictor is in a form of a single element extending over the respective operation ranges of the plurality of manually operable sections.

7. An electric work vehicle, comprising:
- a battery;
- a motor drivable by electric power supplied from the battery;
- a travel device drivable by the motor;
- at least one power port at a side portion of the battery,
the at least one power port being an input port configured to receive electric power into the battery or an output port configured to output electric power from the battery;
- at least one electric wire electrically connected to the at least one power port;
- at least one connection section disposed at an end of the at least one electric wire and connected to the at least one power port; and
- a connection section cover covering the at least one connection section.

8. The electric work vehicle according to claim 7, wherein the connection section cover is held by the battery.

9. The electric work vehicle according to claim 7 or 8, further comprising:
- a cover member covering the battery and swingable about a swing axis to be opened and closed, the swing axis extending laterally relative to a body of the electric work vehicle; and
- a support arm covered by the cover member,
the support arm including a base end portion and a free end portion, swingable upward and downward with the base end portion as a center, and configured to be erected such that the free end portion is in contact with the cover member from below to support the cover member with the cover member open,
wherein the support arm is held by the connection section cover.

10. The electric work vehicle according to any one of claims 7 to 9, wherein the connection section cover is divided into a plurality of cover sections.

11. The electric work vehicle according to any one of claims 7 to 10, further comprising:
a power feed section to which a charger is connectable and which is electrically connected to the battery through the at least one electric wire,
wherein the power feed section is held by the connection section cover.

12. The electric work vehicle according to any one of claims 7 to 11, further comprising:
- a radiator; and
- a radiator frame holding the radiator,
wherein the connection section cover is held by the radiator frame.

13. The electric work vehicle according to any one of claims 7 to 12, wherein the connection section cover includes an upper portion above and on the battery.

14. The electric work vehicle according to any one of claims 7 to 13, wherein
- the connection section cover includes a first wall and a second wall each oriented vertically,
- the first wall and the second wall facing each other, and
- the first wall and the second wall being separated from each other by a gap corresponding to a dimension of the battery which dimension is in a direction in which the first wall and the second wall face each other, and
- the battery is between the first wall and the second wall with the connection section cover attached to a body of the electric work vehicle.

15. The electric work vehicle according to any one of claims 7 to 14, wherein
- the at least one power port includes a plurality of power ports,
- the at least one connection section includes a plurality of connection sections corresponding to the plurality of power ports,
- the connection sections are arranged laterally, and
- the connection section cover is in a form of a single element covering the plurality of connection sections.

16. The electric work vehicle according to claim 15, wherein the plurality of power ports include an electric power port for strong electricity and an electric power port for weak electricity.
